# DEMANDE DE BREVET EUROPEEN

(11) **EP 1 544 990 A2**
(43) Date de publication de la demande: **22.06.2005**
(21) Numéro de dépôt: 04106569.9
(22) Date de dépôt: 14.12.2004
(51) Int. Cl.: H02M 3/02, H02H 9/02

(54) **Limitation de courant dans une inductance avec adaptation de courant limite**

(30) Priorité: 16.12.2003 FR 0351072
(71) Demandeur: ST MICROELECTRONICS S.A., 92120 Montrouge (FR)
(72) Inventeur: Florence, Arnaud, 37360, Saint Antoine du Rocher (FR); Heurtier, Jérôme, 37000, Tours (FR); Galtie, Franck, 31170 Tournefeuille (FR)
(74) Mandataire: de Beaumont, Michel

(57) **Abrégé**

L'invention concerne un procédé et un circuit de limitation du courant dans une inductance (L), consistant à interrompre l'emmagasinage d'énergie dans l'inductance à l'issue d'une temporisation (τ) déclenchée par le courant dans l'inductance.

## Description

La présente invention concerne le domaine des circuits de protection d'une inductance afin que le courant qui la traverse ne dépasse pas son courant de saturation. L'invention concerne tout système dans lequel on souhaite limiter le courant dans une inductance. Un exemple d'application de l'invention est le domaine des convertisseurs de puissance (abaisseur ou élévateur) dans lesquels un interrupteur contrôlant le courant dans une inductance est commandé par train d'impulsions, par exemple modulés en largeur (PWM), en fréquence (FWM), etc.

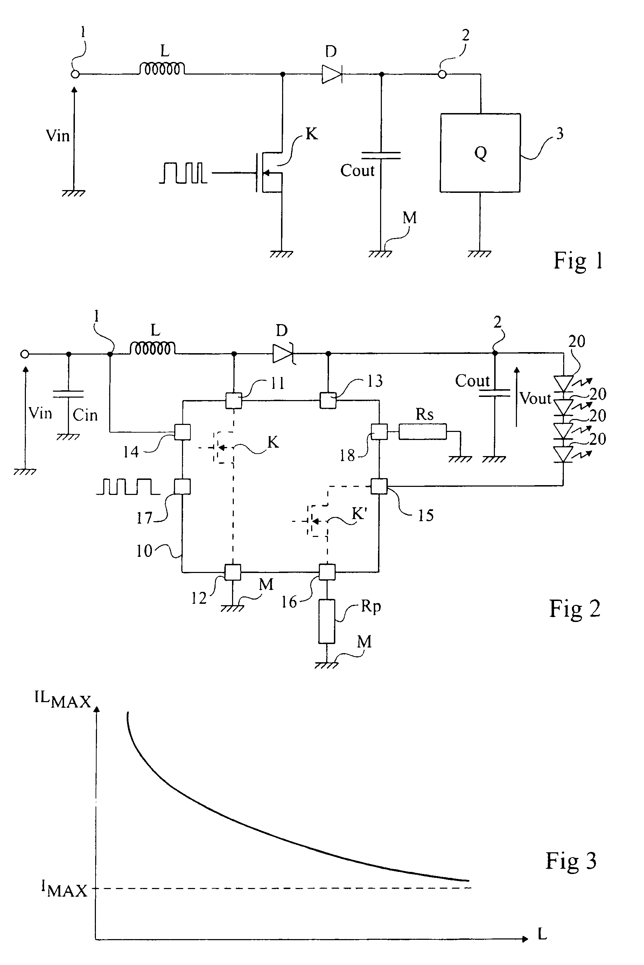

La figure 1 représente, de façon très schématique, un exemple classique de convertisseur élévateur.

Un tel convertisseur est basé sur l'utilisation d'une inductance L en série avec une diode D entre une borne 1 d'application d'une tension continue d'entrée Vin et une borne 2 de fourniture d'une tension de sortie Vout à destination d'une charge 3 (Q). Un condensateur Cout de stockage de la tension Vout est connecté entre la borne 2 et la masse M. En outre, un interrupteur K (par exemple, un transistor MOS) relie l'anode de la diode D (point milieu entre l'inductance et la diode) à la masse. L'interrupteur K est commandé par un train d'impulsions modulées en largeur de façon à asservir la tension de sortie sur les besoins de la charge ou une consigne prédéterminée. Le fonctionnement d'un tel convertisseur est connu. Quand l'interrupteur K est fermé, un courant circule dans l'inductance L depuis la source de tension Vin (par exemple, une batterie) tandis que le condensateur Cout alimente la charge 3. Quand l'interrupteur K s'ouvre, l'énergie emmagasinée dans l'inductance L recharge le condensateur Cout en même temps qu'elle alimente la charge.

Pour protéger l'inductance L contre une détérioration, on doit veiller à ce que le courant qui la traverse n'excède pas son courant de saturation à partir duquel l'inductance se comporte comme un fil. Pour cela, on conditionne classiquement la fermeture de l'interrupteur K à un seuil de courant dans l'inductance ou dans l'interrupteur.

La figure 2 représente un exemple classique d'un circuit 10 intégré de commande d'un convertisseur en PWM intégrant une fonction de protection de l'inductance. On retrouve, intégré à ce circuit, l'interrupteur K (en pointillés) entre deux bornes 11 et 12 du circuit 10 connectées respectivement à l'anode de la diode D (ici une diode Zener) et à la masse M. Pour asservir la tension de sortie Vout, le circuit 10 comporte également une borne 13 de connexion à la borne 2 du convertisseur. Le circuit 10 est alimenté à partir de la tension continue Vin filtrée par un condensateur Cin, la borne 1 étant reliée à une borne 14 du circuit 10.

Dans l'exemple de la figure 2, le convertisseur est destiné à alimenter des diodes électroluminescentes 20 (LEDs) assurant une fonction de rétro-éclairage d'un écran (par exemple, de téléphone mobile). Le circuit 10 intègre alors, de façon optionnelle un second interrupteur K' d'allumage-extinction de la charge constituée des diodes 20 en série. Cet interrupteur K' représenté en pointillés sous la forme d'un transistor MOS relie une borne 15 du circuit 10 reliée à la charge 20 à une borne 16 de ce même circuit reliée à la masse M, généralement par l'intermédiaire d'une résistance de protection Rp. Bien entendu, l'interrupteur K' peut être externe au circuit 10.

Le circuit 10 comprend des moyens non représentés pour mesurer le courant dans l'inductance L. Cette mesure du courant se déduit généralement de la tension aux bornes de l'inductance, mesurée aux bornes 11 et 14 du circuit. Une autre méthode consiste à mesurer (par exemple, au moyen d'un shunt) le courant dans l'interrupteur K. Le circuit 10 compare l'information liée au courant dans l'inductance L à une référence pour forcer l'ouverture de l'interrupteur K en cas de dépassement, indépendamment du signal numérique PWM de consigne fourni sur une borne 17.

Une première famille de circuits connus comporte une référence prédéterminée, interne au circuit 10. Un inconvénient d'une telle solution est que le circuit 10 est alors dédié à une inductance L ou, pour supporter plusieurs inductances de valeurs différentes, requiert une fixation d'un seuil minimal alors que certaines inductances pourraient supporter des courants supérieurs.

Une deuxième solution consiste à prévoir une résistance Rs connectée à une borne supplémentaire 18 du circuit 10 et à la masse M pour paramétrer le seuil de limitation du circuit 10. Une telle solution permet de changer la résistance Rs lorsque l'on veut modifier la valeur du courant limite, par exemple, suite à un changement d'inductance. Un inconvénient de cette solution est qu'elle nécessite une borne (18) de connexion supplémentaire du circuit intégré 10 ainsi qu'une résistance externe.

La figure 3 illustre la variation de courant maximal supportable (ILₘₐₓ) en fonction de la valeur L d'une inductance. La courbe, dont l'allure exacte dépend de la famille d'inductances considérée (matériaux, diamètre du conducteur, capacité à dissiper l'énergie, etc.) montre une décroissance du courant maximal supportable avec l'augmentation de la valeur de l'inductance. Par conséquent, lorsque l'on souhaite fixer un seuil de limitation dans un circuit 10 que ce soit de façon interne ou externe, pour que celui-ci puisse supporter plusieurs inductances L différentes, on est conduit à fixer un seuil Iₘₐₓ relativement faible de façon à pouvoir protéger toutes les inductances de la gamme. Il en découle que, selon l'inductance connectée au circuit 10, ses capacités ne sont pas exploitées pleinement.

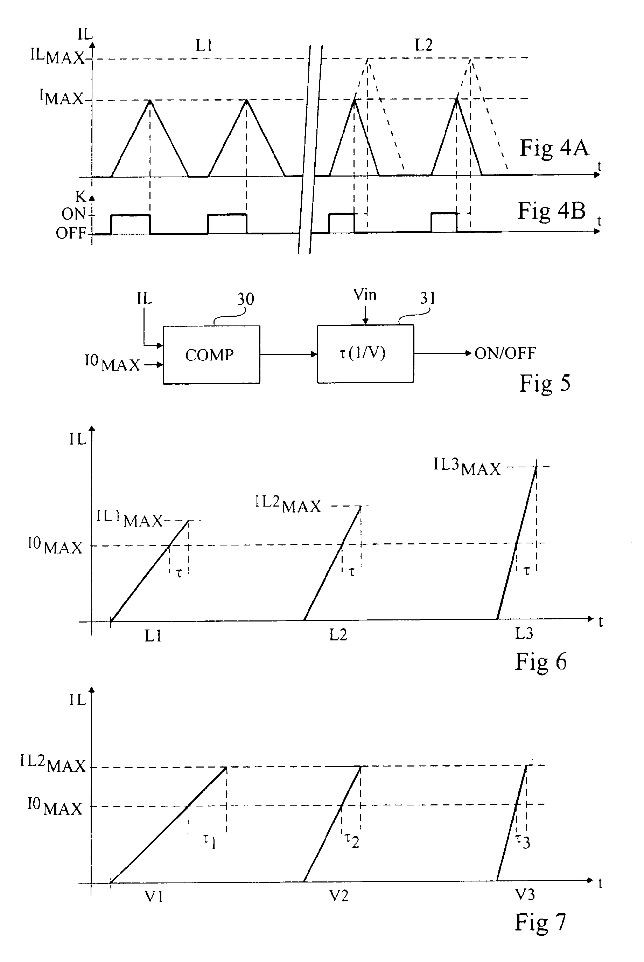

Les figures 4A et 4B illustrent le fonctionnement d'un circuit tel que représenté en figure 2 pour deux valeurs d'inductance L1 et L2 différentes. La partie gauche des chronogrammes des figures 4A et 4B a été tracée pour une inductance de valeur L1 relativement élevée par rapport à la valeur d'une inductance L2 relativement faible dont le fonctionnement est illustré en partie droite des chronogrammes. La figure 4A illustre le courant IL dans l'inductance alors que la figure 4B illustre les périodes d'ouverture OFF et de fermeture ON de l'interrupteur K. On notera toutefois que ceci s'applique au cas d'un convertisseur élévateur tel qu'illustré par la figure 2, les périodes d'ouverture et fermeture de l'interrupteur se trouvant inversées dans le cas d'un convertisseur abaisseur.

Pour permettre un fonctionnement avec les inductances L1 et L2, le courant limite Iₘₐₓ fixé par le circuit 10 est fonction de l'inductance de valeur la plus faible L1. Comme l'illustre les parties droites des chronogrammes, il en découle que l'inductance L2 dont le courant limite ILₘₐₓ est supérieur au courant Iₘₐₓ n'est pas exploitée pleinement. En effet, même en admettant que le rapport cyclique des impulsions de fermeture de l'interrupteur K est fixé comme pour l'inductance de faible valeur L1, la fonction de limitation est activée dès que le courant I dépasse la valeur Iₘₐₓ, alors que l'asservissement du convertisseur sur une consigne de tension de sortie Vout aurait nécessité une période d'accumulation d'énergie plus longue.

Le besoin de disposer d'un circuit intégré de commande d'un convertisseur qui puisse accepter plusieurs valeurs d'inductance différentes se rencontre de plus en plus souvent. En effet, les fabricants des circuits intégrés 10 de commande sont généralement distincts des fabricants des inductances, eux-mêmes distincts des fabricants qui vont assurer le montage de l'inductance et du circuit 10 dans un convertisseur.

La présente invention vise à améliorer l'exploitation des performances d'une inductance tout en la protégeant.

La présente invention vise notamment à asservir le courant de limitation d'un circuit de commande d'une inductance à la valeur de cette dernière.

L'invention vise également à proposer une solution insensible aux variations éventuelles de la tension d'alimentation Vin, notamment lorsque cette tension correspond à une tension de batterie.

L'invention vise également à proposer un circuit intégré de commande d'un interrupteur à connecter à une inductance, qui possède une fonction de limitation du courant dans celle-ci, sans nécessiter de résistance externe de paramétrage de la valeur du courant de limitation.

Pour atteindre tout ou partie de ces objets ainsi que d'autres, la présente invention prévoit un circuit de limitation du courant dans une inductance, comportant des moyens pour interrompre l'emmagasinage d'énergie dans l'inductance à l'issue d'une temporisation déclenchée par le courant dans l'inductance et fonction de la tension d'alimentation de l'inductance.

Selon un mode de réalisation de la présente invention, le circuit comporte :
des moyens de comparaison du courant dans l'inductance par rapport à une valeur ;
des moyens pour déclencher un élément retardateur lorsque ladite valeur est atteinte ; et
des moyens pour interrompre l'emmagasinage d'énergie dans l'inductance à l'issue d'un retard fixé par ledit élément retardateur.

Selon un mode de réalisation de la présente invention, ledit retard est proportionnel à l'inverse de la tension d'alimentation de l'inductance.

Selon un mode de réalisation de la présente invention, ladite valeur est déterminée en fonction d'une famille d'inductances à laquelle le circuit est destiné.

L'invention prévoit également un procédé de limitation du courant dans une inductance, consistant à interrompre l'emmagasinage d'énergie dans l'inductance à l'issue d'une temporisation déclenchée par le courant dans l'inductance et fonction de la tension d'alimentation de l'inductance.

Selon un mode de mise en oeuvre de la présente invention, le procédé consiste :
à déclencher un élément de temporisation à l'apparition d'un courant excédant une valeur dans l'inductance ; et
à interrompre l'emmagasinage d'énergie dans l'inductance à l'issue d'un retard déterminé.

Selon un mode de mise en oeuvre de la présente invention, le retard est proportionnel à l'inverse de la tension d'alimentation de l'inductance.

L'invention prévoit également un circuit de commande d'un convertisseur de tension comprenant un interrupteur de découpage, comportant un circuit de limitation.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1, 2, 3, 4A et 4B décrites précédemment, sont destinées à exposer l'état de la technique et le problème posé ;
la figure 5 illustre, de façon très schématique et sous forme de blocs, un mode de mise en oeuvre du procédé d'asservissement du courant limite d'une inductance selon la présente invention ;
la figure 6 illustre un mode de mise en oeuvre du procédé de l'invention sur une variation de valeur d'inductance ;
la figure 7 illustre un mode de mise en oeuvre du procédé de l'invention sur une variation de la tension d'alimentation de l'inductance ;
la figure 8 représente, par une vue à rapprocher de la figure 2, un mode de réalisation d'un circuit intégré de commande d'un interrupteur d'un convertisseur élévateur selon l'invention ;
la figure 9 représente un mode de réalisation du circuit de limitation selon l'invention ; et
les figures 10A, 10B et 10C illustrent, par des chronogrammes, le fonctionnement du circuit de la figure 9.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, le circuit de génération des impulsions de commande de l'interrupteur K avec asservissement de la tension de sortie n'a pas été détaillé et ne fait pas l'objet de la présente invention, l'invention et son circuit de limitation pouvant être mis en oeuvre avec tout asservissement classique des périodes de fermeture du commutateur.

Une caractéristique d'un mode de réalisation de la présente invention est de comparer le courant dans l'inductance d'un convertisseur à un seuil de courant prédéterminé, et de déclencher un retard quand le courant dans l'inductance dépasse ce seuil prédéterminé, la limitation étant alors considérée comme activée, à l'issu du retard apporté à la détection.

Une autre caractéristique d'un mode de réalisation de l'invention est que le retard est fonction de la tension Vin d'alimentation de l'inductance, plus précisément, est proportionnel à l'inverse de cette tension.

La figure 5 représente, de façon très schématique et sous forme de blocs, un mode de réalisation fonctionnel d'un circuit de limitation selon l'invention. Ce circuit comporte un comparateur 30 du courant IL dans l'inductance (ou dans le commutateur) par rapport à un seuil I0ₘₐₓ. Le résultat du comparateur 30 est envoyé sur un élément retardateur 31 (τ(1/V)) dont la sortie conditionne l'état ON/OFF du commutateur (non représenté), l'élément retardateur 31 recevant de préférence la tension Vin pour asservir la valeur du retard sur l'inverse de cette tension.

La présente invention tire profit du fait que le courant dans l'inductance est fonction du rapport entre la tension qui lui est appliquée et la valeur de cette inductance (dI=(V/L)dt). Ainsi, l'invention prévoit de générer un retard proportionnel à l'inverse de la tension, et d'arrêter le courant dans l'inductance avec retard par rapport au dépassement d'un seuil prédéterminé. Cela revient à interrompre l'emmagasinage d'énergie dans l'inductance à l'issue d'une temporisation déclenchée en fonction du courant dans l'inductance, cette temporisation étant de préférence fonction de la tension alimentant l'inductance.

La figure 6 illustre la mise en oeuvre du procédé de l'invention à une variation de la valeur de l'inductance. Cette figure représente l'allure du courant IL dans l'inductance en fonction du temps pour trois valeurs L1, L2, L3 décroissantes.

Le seuil de courant I0ₘₐₓ est fixé à partir d'une courbe du type de celle représentée en figure 3, déterminée empiriquement ou à partir d'un échantillon d'inductances auquel doit s'appliquer le circuit, et est bien entendu choisi pour être inférieur au courant de saturation de l'inductance de valeur maximale supportable par le circuit.

Si le courant dans l'inductance atteint le seuil I0ₘₐₓ, cela déclenche l'élément retardateur fixant le retard τ et l'interrupteur est ouvert à l'issue de ce retard τ. En figure 6, on suppose la tension Vin constante de sorte que le retard τ appliqué aux différents instants de dépassement de la valeur I0ₘₐₓ est le même pour les trois valeurs d'inductance L1, L2, L3. Toutefois, comme la pente du courant dépend de la valeur de cette inductance (est inversement proportionnelle à la valeur de l'inductance), l'application du même retard aux différentes pentes de courant conduit à interrompre ce courant pour des valeurs croissantes alors que la valeur d'inductance diminue (IL1max, IL2max, IL3max). En choisissant de façon adaptée la valeur I0max et le retard τ, on peut suivre approximativement la courbe du courant limite par rapport à l'inductance du type de celle illustrée en figure 3. Cette courbe est non linéaire et, en première approximation, varie en I0ₘₐₓ k/L, où k est une constante.

La figure 7 illustre l'application du procédé de l'invention à une inductance de même valeur mais subissant une variation de la tension d'alimentation. En figure 7, on a pris l'exemple de la valeur d'inductance L2 pour trois tensions V1, V2, V3 croissantes. La valeur I0max est la même qu'en figure 6. Comme l'inductance a la même valeur, l'application du procédé doit conduire à l'application d'un seuil IL2ₘₐₓ toujours identique. Cette condition est respectée en faisant ici varier le retard τ de façon inversement proportionnelle à la tension d'alimentation, de façon à obtenir trois retards τ1, τ2, τ3 respectivement décroissant et garantir ainsi le respect du seuil IL2ₘₐₓ·

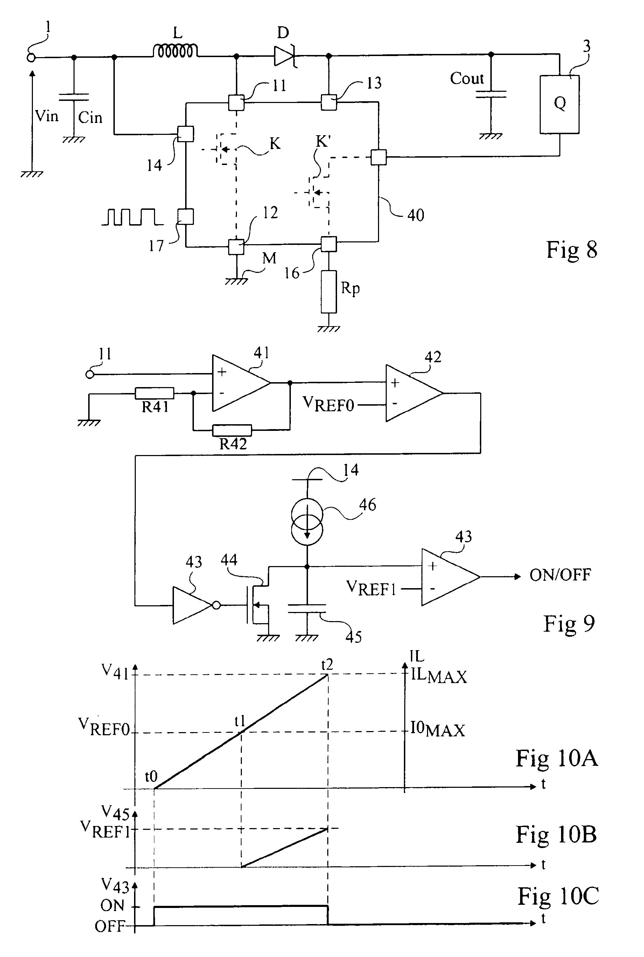

La figure 8 représente, par une vue à rapprocher de la figure 2, un circuit 40 intégrant un interrupteur K (en pointillés) de commande d'une inductance L dans un montage de convertisseur élévateur. On retrouve les mêmes éléments qu'en figure 2 à l'exception notable de la résistance Rs qui, selon l'invention, n'est plus nécessaire. L'invention fait l'économie d'une borne de connexion externe du circuit intégré 40 ainsi que d'une résistance externe.

La figure 9 représente un mode de réalisation d'un circuit de limitation intégré au circuit 40 de la figure 8. Ce circuit est destiné à fournir le signal ON/OFF de fermeture et ouverture de l'interrupteur K à partir de la seule détection du courant dans l'inductance L. Par conséquent, le circuit de la figure 9 prélève l'information de détection sur les bornes 14 et 11. L'information de tension prélevée sur la borne 11 est comparée (comparateur 42) à une première référence de tension prédéterminée Vref0 (entrée inverseuse). En option, on pourra utiliser, en amont du comparateur 42, un amplificateur 41 dont l'entrée non inverseuse est reliée directement à la borne 11 et dont l'entrée inverseuse est reliée par l'intermédiaire d'une résistance R41 à la masse. L'entrée inverseuse est également rebouclée sur la sortie de l'amplificateur 41 au moyen d'une résistance R42. La tension de référence Vref0 est fixée en fonction du courant I0ₘₐₓ souhaité.

La sortie du comparateur 42 traverse un inverseur 43 avant d'attaquer l'électrode de commande (par exemple, la grille d'un transistor MOS) d'un interrupteur 44 servant à court-circuiter un condensateur 45 constituant l'élément retardateur. Ce condensateur 45 est alimenté par une source de courant constant 46 prélevant son énergie de la borne 14, c'est-à-dire directement de la tension Vin. Le point milieu de l'association en série de la source 46 et du condensateur 45 est relié à l'entrée non inverseuse d'un deuxième comparateur 43 dont l'entrée inverseuse reçoit une deuxième référence prédéterminée Vref1 et dont la sortie fournit le signal ON/OFF. La tension de référence Vref1 définit la durée variable du retard du procédé de l'invention.

Les figures 10A, 10B, 10C illustrent, sous forme de chronogrammes, le fonctionnement du circuit de la figure 9. La figure 10A représente l'allure de la tension V41 en sortie de l'amplificateur 41 qui constitue une image du courant IL dans l'inductance. La figure 10B illustre l'allure de la tension V45 aux bornes du condensateur 45 et la figure 10C illustre l'allure de la tension de sortie de l'amplificateur V43 c'est-à-dire du signal ON/OFF.

Lorsque le courant dans l'inductance croît, la tension V41 croît de façon proportionnelle. A un instant t1 où le seuil Vref0 est atteint, la charge du condensateur 45 commence, suite à l'ouverture de l'interrupteur 44 par la commutation de l'amplificateur 42. Lorsque cette charge atteint le niveau Vref1 (instant t2), la sortie de l'amplificateur 43 bascule ce qui provoque l'ouverture de l'interrupteur et l'activation de la fonction de limitation.

Bien entendu, la présente invention est susceptible de diverses variantes et modifications qui apparaîtront à l'homme de l'art. En particulier, l'exemple de circuit de mise en oeuvre exposé en relation avec la figure 9 pourra être remplacé par un circuit remplissant la même fonction, par exemple, utilisant des moyens numériques.

De plus, le choix des seuils pour la mise en oeuvre du procédé de l'invention est à la portée de l'homme du métier à partir des indications fonctionnelles données ci-dessus et de la plage d'inductances auquel il souhaite destiner le circuit de limitation.

En outre, l'interruption de l'emmagasinage d'énergie dans l'inductance n'est pas forcément obtenue en interrompant la boucle batterie-inductance comme cela a été exposé en relation avec un convertisseur élévateur. Selon le montage, il peut s'agir d'interrompre son alimentation avec un interrupteur placé entre la source d'énergie et l'inductance, de forcer un fonctionnement en roue libre, de forcer une décharge, etc.

Enfin, si l'invention a été décrite plus particulièrement en relation avec une réalisation matérielle et analogique, sa mise en oeuvre peut faire appel à des moyens numériques et/ou logiciels.

## Revendications

1. Circuit de limitation du courant dans une inductance (L), **caractérisé en ce qu'**il comporte des moyens pour interrompre l'emmagasinage d'énergie dans l'inductance à l'issue d'une temporisation (τ) déclenchée par le courant dans l'inductance et fonction de la tension d'alimentation (Vin) de l'inductance (L).

2. Circuit selon la revendication 1, comportant :
des moyens (30) de comparaison du courant dans l'inductance (L) par rapport à une valeur (Vref0) ;
des moyens pour déclencher un élément retardateur (31) lorsque ladite valeur est atteinte ; et
des moyens (K) pour interrompre l'emmagasinage d'énergie dans l'inductance (L) à l'issue d'un retard (τ) fixé par ledit élément retardateur.

3. Circuit selon la revendication 1, dans lequel ledit retard (τ) est proportionnel à l'inverse de la tension d'alimentation (Vin) de l'inductance (L).

4. Circuit selon la revendication 2, dans lequel ladite valeur (Vref0) est déterminée en fonction d'une famille d'inductances (L) à laquelle le circuit est destiné.

5. Procédé de limitation du courant dans une inductance (L), **caractérisé en ce qu'**il consiste à interrompre l'emmagasinage d'énergie dans l'inductance à l'issue d'une temporisation (τ) déclenchée par le courant (IL) dans l'inductance et fonction de la tension d'alimentation (Vin) de l'inductance (L).

6. Procédé selon la revendication 5, consistant :
à déclencher un élément de temporisation (31) à l'apparition d'un courant (IL) excédant une valeur dans l'inductance (L) ; et
à interrompre l'emmagasinage d'énergie dans l'inductance à l'issu d'un retard déterminé (τ).

7. Procédé selon la revendication 6, dans lequel le retard (τ) est proportionnel à l'inverse de la tension d'alimentation (Vin) de l'inductance (L).

8. Circuit de commande d'un convertisseur de tension comprenant un interrupteur (K) de découpage, **caractérisé en ce qu'**il comporte un circuit (40) de limitation conforme à l'une quelconque des revendications 1 à 4.
